# EUROPÄISCHE PATENTSCHRIFT

(11) **EP 2 183 952 B1**
(45) Veröffentlichungstag und Bekanntmachung des Hinweises auf die Patenterteilung: **27.04.2011**
(21) Anmeldenummer: 09013943.7
(22) Anmeldetag: 06.11.2009
(51) Int. Cl.: A01C 7/04

(54) **Säherz und Einzelkornsämaschine**
Seed meter and single grain seeder
Elément doseur d'un semoir et semoir monograine

(30) Priorität: 08.11.2008 DE 102008056534
(43) Veröffentlichungstag der Anmeldung: 12.05.2010
(73) Patentinhaber: Kverneland ASA, 4355 Kvernaland (NO)
(72) Erfinder: Beier, Carsten, 33154 Salzkotten (DE)
(74) Vertreter: Schweiger, Johannes

(56) Entgegenhaltungen:
- EP-A1- 0 193 833
- DE-A1- 3 831 042
- US-A- 5 170 909

## Beschreibung

Die Erfindung betrifft ein Säherz nach Anspruch 1 und eine Einzelkornsämaschine nach Anspruch 8.

Solche Einzelkornsämaschinen weisen meist eine Mehrzahl von Säreihen mit einer Vielzahl von Säherzen auf. Bekannte Säherzen für pneumatische Einzelkornsäaggregate bestehen in der Regel aus zwei Hälften, nämlich einem hinteren Teil, in welchem die Lagerung der Säscheibe und der Unterdruckbereich untergebracht sind und einem vorderen Teil, in welchen der untere Ausgang des Saatgutbehälters mündet und der selbst einen Saatgutspeicher aufweist.

Die Säscheibe bildet dabei eine Trennwand zum Unterdruckbereich sowie eine Trennwand des Saatgutspeichers.

Besondere Bedeutung kommt dabei der Abdichtung des Saatgutspeichers zu, da auf Grund der rotierenden Säscheibe und der unterschiedlichen Druckverhältnisse auf den beiden Seiten der Säscheibe Saatgut, insbesondere Feinsaatgut wie Gemüsesamen, aus dem Saatgutspeicher unplanmäßig entweichen kann, wodurch sogar die Rotation der Säscheibe behindert werden kann.

Um eine möglichst dichte Abtrennung des Saatgutspeichers, insbesondere im Bereich der Schnittstelle zwischen der Wand des Saatgutspeichers und der an dieser Wand anliegenden rotierenden Säscheibe, sicherzustellen, ist eine besonders sorgfältige Anpassung der Säscheibe erforderlich. Im Stand der Technik wird die Wand in der Regel manuell eingeschliffen, wodurch die Produktion der Säherzen erheblich verteuert wird.

Weiterhin ergibt sich daraus der Nachteil, dass die aufeinander angepassten Hälften des Säherzes nicht gegenseitig austauschbar sind, obwohl insbesondere auf Grund der Vielzahl von Säherzen pro Sämaschine ein einfacheres Austauschen, beispielsweise beim Säscheibenwechsel, wünschenswert wäre.

Die EP 0 193 833 offenbart eine Sävorrichtung, mit einer in einem Gehäuse drehbar gelagerten Säscheibe, die auf einer drehbar gelagerten Welle lösbar angeordnet ist und eine axial verstellbare Nabe auf der Welle angeordnet ist die zum Anschluss der Säscheibe dient.

Aufgabe der vorliegenden Erfindung ist es, ein einfach zu handhabendes Säherz vorzusehen, das günstiger herzustellen ist und dessen Bauteile möglichst einfach und flexibel austauschbar sind.

Diese Aufgabe wird mit einem Säherz mit den Merkmalen des Anspruchs 1 sowie einer Einzelkornsämaschine mit den Merkmalen des Anspruchs 8 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Grundidee der vorliegenden Erfindung ist es, die Säscheibe des Säherzes durch eine in axialer Richtung wirkende Stelleinrichtung gegenüber der Trennwand des Saatgutspeichers in axialer Richtung zumindest teilweise stufenlos einstellbar auszugestalten. Dies wird insbesondere durch Vorsehen eines durch ein Stellglied beaufschlagten Flansches auf der Achse/Antriebswelle des Säherzes erreicht, der durch ein Spannelement gegenüber dem Stellglied vorgespannt wird. Stellglied, Flansch und Spannelement sind Bestandteile der Stelleinrichtung.

Mit anderen Worten: Die Säscheibe ist auf einem axial auf der Achse/Antriebswelle der Säscheibe montierten Flansch, der mit dem oben genannten Flansch identisch ist oder durch diesen gebildet ist, durch ein Stellglied, insbesondere eine Mutter, axial verstellbar beziehungsweise einstellbar, vorzugsweise in einem kleinen, aber exakten Verstellbereich von bevorzugt weniger als 1 mm, noch bevorzugter weniger als 0,5 mm. Der Flansch ist von seiner Rückseite durch das Spannelement vorgespannt und nimmt auf seiner Vorderseite die Säscheibe rotationsfest auf.

Durch die vorbeschriebene Maßnahme ist es erstmals möglich, die Säscheibe ohne vorheriges Einschleifen der Hälften des Säherzes einzubauen/auszuwechseln. Beim Bruch oder Austausch von Hälften des Säherzes oder anderen Bestandteilen ist es nicht mehr erforderlich, das ganze, teure Säherz auszutauschen.

Weiterhin ermöglicht diese Konstruktion eine Einstellung des axialen Abstands zwischen Trennwand und Säscheibe ohne Ausbau der Säscheibe.

Eine durch die Trennwand gebildete Trennwandebene ist parallel zu einer durch die Säscheibe gebildeten Säscheibenebene, wobei die Säscheibenebene durch die Stelleinrichtung gegenüber der Trennwandebene parallelverschieblich ausgebildet ist.

Nach der Montage der Säscheibe kann daher der Spalt zwischen Trennwand und rotierbarer Säscheibe durch das Stellglied im Rahmen der Fertigungsgenauigkeiten mit Vorteil auf ein Minimum, vorzugsweise auf Null reduziert werden, ohne dass beim Betrieb des Säherzes durch Reibung zwischen Trennwand und Säscheibe ein wesentlicher Abrieb entsteht. Die Anpreßkraft der Säscheibe auf die Trennwand ist in vorteilhafter Weise im Rahmen der Fertigungsgenauigkeiten ebenfalls auf ein Minimum, insbesondere auf Null, zu reduzieren.

Durch die erfindungsgemäße Ausgestaltung ergibt sich der Vorteil, dass das Saatgut nicht zwischen Trennwand und Säscheibe gezogen wird und das teure Saatgut unkontrolliert auf den Ackerboden gelangt oder gar zerstört wird.

Unter dem Begriff Saatgut im Rahmen der vorliegenden Offenbarung sind beispielsweise Dünger, Samenkörner, ob pilliert oder nackt, subsumierbar.

Durch die, insbesondere mit geringem Federweg, federbeaufschlagte Lagerung der rotierenden Säscheibe wird die Säscheibe genau gegenüber der Trennwand positioniert, so dass der Bevorratungsabschnitt mit dem Saatgutspeicher und der Transport-/Abgabeabschnitt optimal abgetrennt, insbesondere abgedichtet, sind und selbst Kleinstsaatgut über eine lange Laufzeit des Säherzes ohne Verlust im Bevorratungsabschnitt verbleibt.

In einer vorteilhaften Ausführungsform der Erfindung weist die Stelleinrichtung ein Spannelement, insbesondere eine Feder, vorzugsweise eine Flachfeder, noch bevorzugter eine Tellerfeder, zur Beaufschlagung der Säscheibe gegen ein Stellglied der Stelleinrichtung auf. Durch die flache Form einer Tellerfeder sowie die definierte und hohe Kraftübertragung einer Tellerfeder wird eine optimale Umsetzung der Anforderungen an das Spannelement ermöglicht, nämlich eine Platz sparende Unterbringung unterhalb der Säscheibe mit einem geringen Federhub beziehungsweise Federweg.

Mit Vorteil ist das Spannelement gemeinsam mit der Säscheibe rotierbar, damit ein gegenseitiges Abtragen möglichst vermieden wird.

Weiterhin ist das Spannelement mit Vorteil auf einer Antriebswelle zur Rotation der Säscheibe angeordnet, da hierdurch eine optimale Kraftverteilung wegen der zentrischen Anordnung des Spannelements erfolgt. Besonders vorteilhaft ist dabei die Kombination mit der oben beschriebenen Tellerfeder.

Soweit die durch das Spannelement erzeugte Vorspannkraft und die Rotationskraft der Antriebswelle über einen, insbesondere mit der Antriebswelle rotationsfest fixierten, Flansch auf die Säscheibe übertragen wird, ist mit Vorteil eine optimale Kraftübertragung sowohl der Rotationskraft als auch der Vorspannkraft zwischen Spannelement, Antriebswelle und Säscheibe sowie dem Stellglied möglich.

Es ist auch denkbar, das Spannelement und den Flansch einteilig aus einem elastischen Werkstoff zu fertigen, der entsprechende Federeigenschaften, beispielsweise entsprechend der Tellerfeder, hat. Dabei kann der Flansch aus Kunststoff, beispielsweise PA6, mit einem im Zentrum des Flansches eingebrachten elastischen Werkstoff, beispielsweise PU, gebildet sein.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1a und 1 b:: perspektivische Ansichten eines Einzelkornsäaggregats einer erfindungsgemäßen Einzelkornsämaschine von schräg hinten (Figur 1a) und von schräg vorne (Figur 1b),
- Figur 2a:: eine perspektivische Ansicht eines teilweise aufgeschnittenen erfindungsgemäßen Säherzes,
- Figur 2b:: eine Detailansicht aus Figur 2a betreffend die Antriebswelle beziehungsweise Achse des erfindungsgemäßen Säherzes und
- Figur 3:: eine perspektivische, aufgeklappte Ansicht des erfindungsgemäßen Säherzes, teilweise aufgeschnitten.

In den Figuren sind gleiche Bauteile und Bauteile mit der gleichen Funktion mit den gleichen Bezugszeichen gekennzeichnet.

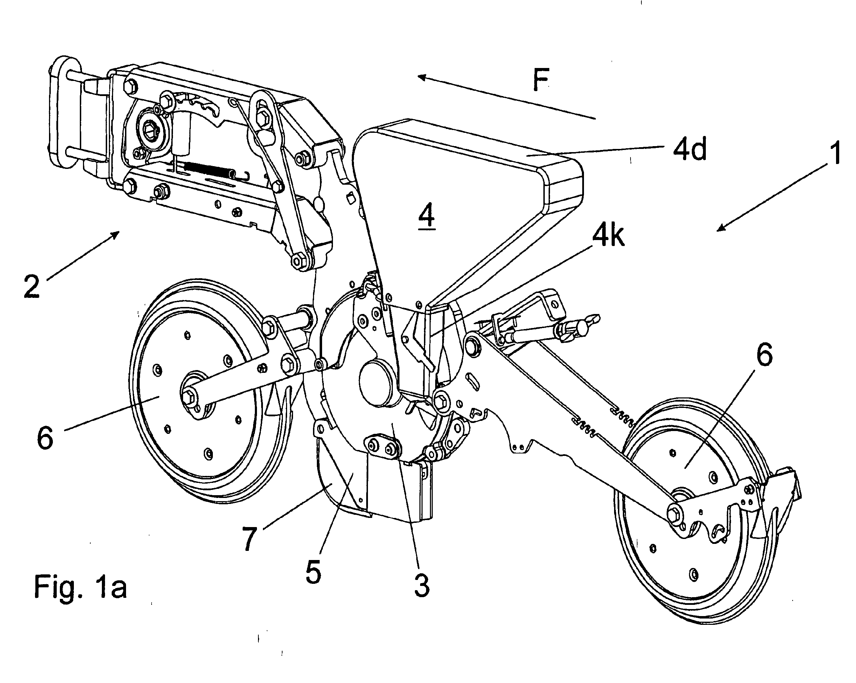

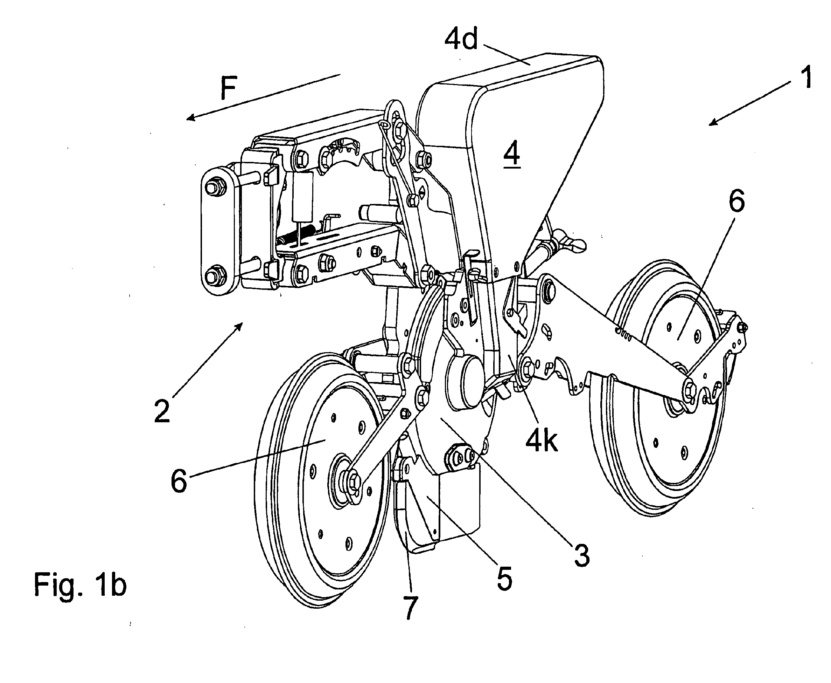

In Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung beim Betrieb der Einzelkornsämaschine in der durch Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherzen 3 angeordnete, gegenüber dem Säherz 3 schwenkbare Laufräder 6 angebracht.

Der Tank 4 ist über einen Deckel 4d verschließbar und mit Saatgut 16 befüllbar, das wiederum über einen Kanal 4k seitlich in das Säherz 3 geführt wird.

Das Saatgut 16 wird im Säherz 3 vereinzelt und über das Säschar 5 in eine durch eine Scharspitze 7 des Säschars 5 geöffnete Furche im Ackerboden abgelegt.

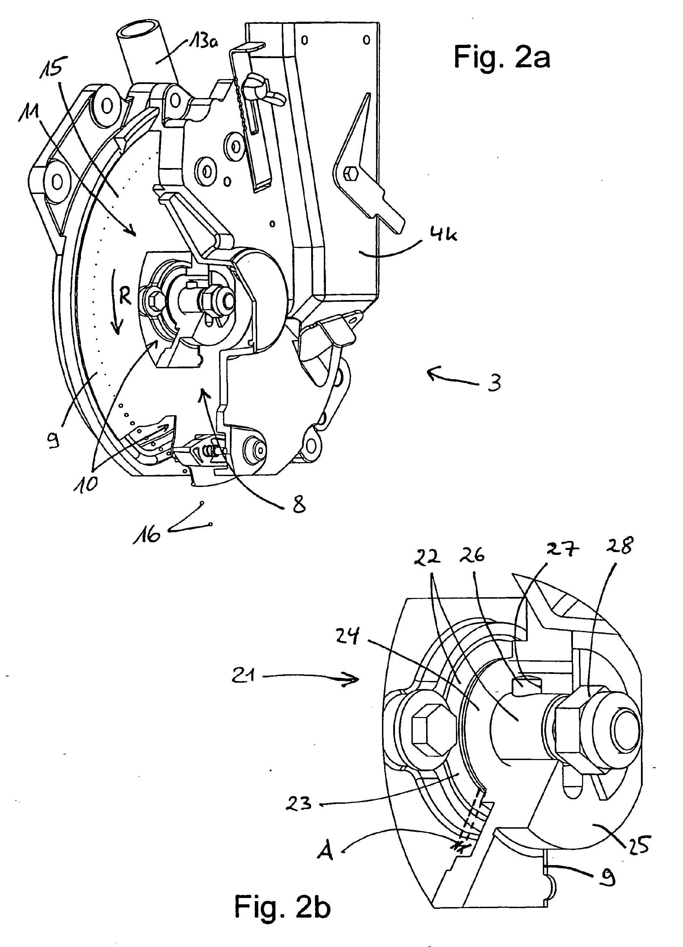

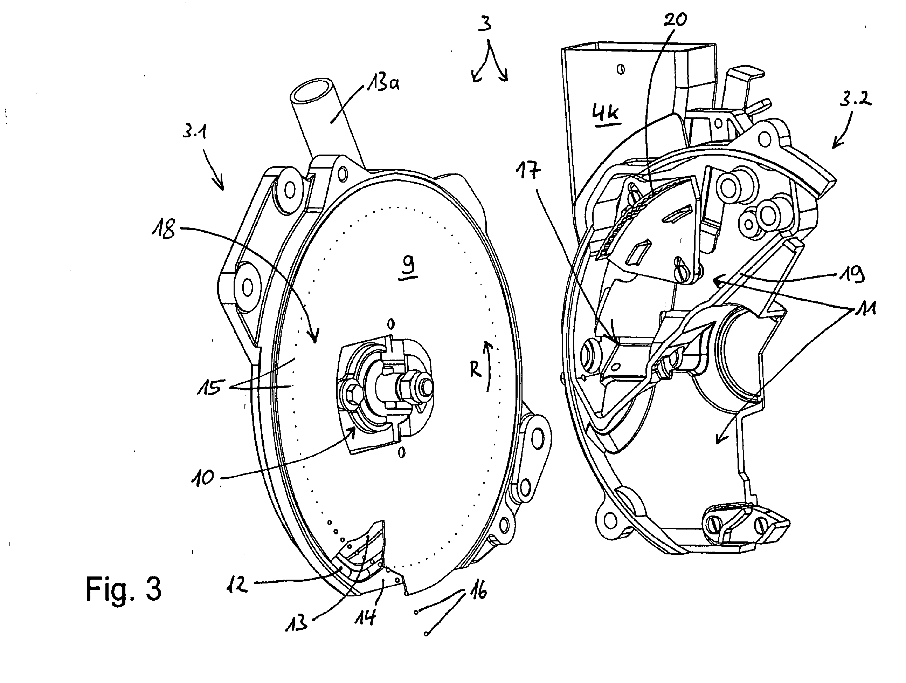

In Figur 2a und Figur 3 ist das Säherz 3 mit seinen beiden Hälften 3.1 und 3.2 (siehe Figur 3) dargestellt, wobei der durch die beiden Hälften 3.1 und 3.2 umschlossene Arbeitsraum 8 durch eine Säscheibe 9 in eine Druckkammer 10 und eine Saatgutkammer 11 unterteilt wird.

Die Druckkammer 10 ist durch einen, vorzugsweise herkömmlichen, Dichtring 12 in einen Unterdruckbereich 13 und einen Normaldruckbereich 14 aufgeteilt. Wesentlich ist dabei, dass im Unterdruckbereich 13 an zur Aufnahme und Abgabe von Saatgut dienenden Sälöchern 15 der Säscheibe 9 eine Druckdifferenz anliegt, die im Normaldruckbereich 14 aufgelöst wird, wodurch beim Übergang der Sälöcher 15 vom Unterdruckbereich 13 in den Normaldruckbereich 14 das Saatgut 16 durch Rotationsbewegung der Säscheibe 9 in einer Laufrichtung R der Säscheibe 9 abgeworfen wird.

Die Saatgutkammer 11 ist gemäß Figur 3 in einen Bevorratungsabschnitt 17 und einen Transport- und Abgabeabschnitt 18 unterteilt, wobei die Unterteilung durch eine Trennwand 19 erfolgt.

Der Unterdruckbereich 13 wird von einer nicht dargestellten Pumpe oder einem Unterdruckgebläse über den Anschluss 13a mit Unterdruck beaufschlagt.

Im Bevorratungsabschnitt 17 wird das Saatgut 16 aus dem Kanal 4k gespeichert und konstant nachgefüllt, während über die sich drehende Säscheibe 9 konstant einzelne Körner des Saatguts 16 aufgenommen und aus dem Bevorratungsabschnitt 17 über den Transport- und Abgabeabschnitt 18 in durch die Abstände zwischen den Sälöchern 15 vorgegebenen Intervallen an das Säschar 5 (siehe Figur 1a, 1b) abgegeben werden.

Sollten an einem Säloch 15 mehrere Körner des Saatguts 16 anhaften, ist ein, insbesondere einstellbarer, Abstreifer 20 zum Abstreifen überschüssiger Körner vorgesehen, so dass jeweils nur ein Korn pro Säloch 15 anliegt.

Die Sälöcher 15 sind auf einer Kreisbahn der Säscheibe 9 in definierten Abständen angeordnet, wobei auch mehrere Kreisbahnen mit Sälöchern 15 vorgesehen sein können.

Das für die vorliegende Erfindung entscheidende Bauteil ist in Figur 2b vergrößert dargestellt, nämlich die Lagerung 21 der Säscheibe 9. Die Hälfte 3.1 des Säherzes 3 ist von einer Antriebswelle 22 durchsetzt, die von einem nicht dargestellten Motor oder einem Antriebsrad via Getriebe antreibbar ist.

Auf einem zur Säscheibe 9 gerichteten Absatz 23 ist zwischen dem Absatz 23, an diesem anliegend und einem Flansch 25, ein Spannelement 24, nämlich hier eine Tellerfeder, ringförmig um die Antriebswelle 22 angeordnet die sich auf Ihrer von dem Absatz 23 abgewandten Seite gegen einen Flansch 25 abstützt.

Der Flansch 25 ist rotationskraftschlüssig mit der Antriebswelle 22 verbunden und zwar durch Vorsprünge 26 der Antriebswelle 22 und korrespondierende Ausnehmungen 27 des Flansches 25.

Durch eine gegen Lösen gesicherte Mutter 28 ist der Abstand A zwischen Absatz 23 und Flansch 25 und damit der Abstand zwischen Absatz 23 und Säscheibe 9 exakt einstellbar, so dass ein Einschleifen der Trennwand 19 auf die konkreten Abmessungen des Säherzes 3 im Bereich der Trennwand 19 nicht mehr oder nur in verhältnismäßig geringem Umfang notwendig ist. Die auf die Trennwand 19 wirkende Druckkraft bleibt über eine sehr lange Laufzeit des Säherzes 3 selbst bei Abrieb der Trennwand 19 und/oder der Säscheibe 9 annähernd konstant.

### Bezugszeichenliste

- A: Abstand
- F: Fahrtrichtung
- R: Laufrichtung Säscheibe
- 1: Säaggregat
- 2: Arm
- 3: Säherz
- 3.1: Hälfte
- 3.2: Hälfte
- 4: Tank
- 4d: Deckel
- 4k: Kanal
- 5: Säschar
- 6: Laufräder
- 7: Scharspitze
- 8: Arbeitsraum
- 9: Säscheibe
- 10: Druckkammer
- 11: Saatgutkammer
- 12: Dichtring
- 13: Unterdruckbereich
- 13a: Anschluss
- 14: Normaldruckbereich
- 15: Sälöcher
- 16: Saatgut
- 17: Bevorratungsabschnitt
- 18: Transport- und Abgabeabschnitt
- 19: Trennwand
- 20: Abstreifer
- 21: Lagerung
- 22: Antriebswelle
- 23: Absatz
- 24: Spannelement
- 25: Flansch
- 26: Vorsprung
- 27: Ausnehmungen
- 28: Stellglied, insbesondere Mutter

## Patentansprüche

1. Säherz (3) für eine Einzelkornsämaschine mit folgenden Merkmalen:
- eine durch eine rotierbare Säscheibe (9) von einer Druckkammer (10) getrennte Saatgutkammer (11),
- die Säscheibe (9) weist Sälöcher (15) in definierter Anordnung zur definierten Aufnahme und Abgabe von Saatgut (16) mittels durch die Druckkammer (10) definierte Druckabschnitte (13, 14) auf,
- die Saatgutkammer (11) ist in einen Bevorratungsabschnitt (17) und einen Transport- und Abgabeabschnitt (18) geteilt,
- der Bevorratungsabschnitt ist durch eine Trennwand (19) zumindest teilweise gegenüber dem Transport- und Abgabeabschnitt (18) getrennt,
**dadurch gekennzeichnet, dass**
die Säscheibe (9) durch eine zumindest teilweise stufenlose Stelleinrichtung gegenüber der Trennwand (19) einstellbar ist und die Stelleinrichtung ein Spannelement (24) zur Beaufschlagung der Säscheibe (9) gegen ein Stellglied (28) der Stelleinrichtung aufweist.

2. Säherz (3) nach Anspruch 1, **dadurch gekennzeichnet,**
**dass** das Spannelement (24) eine Feder, vorzugsweise eine Flachfeder, noch bevorzugter eine Tellerfeder ist.

3. Säherz (3) nach Anspruch 2, **dadurch gekennzeichnet,**
**dass** das Spannelement (24) mit der Säscheibe (9) rotierbar angeordnet ist.

4. Säherz (3) nach Anspruch 2 oder 3, **dadurch gekennzeichnet, dass** das Spannelement (24) auf einer Antriebswelle (22) zur Rotation der Säscheibe (9) angeordnet ist.

5. Säherz (3) nach einem der Ansprüche 2 bis 4, **dadurch gekennzeichnet,**
**dass** die Stelleinrichtung einen Flansch (25) zwischen Spannelement (24) und der Säscheibe (9) zur Übertragung der Rotationskraft von einer Antriebswelle (22) des Säherzes (3) auf die Säscheibe (9) aufweist.

6. Säherz (3) nach einem der Ansprüche 2 bis 5, **dadurch gekennzeichnet,**
**dass** der Federweg der Feder kleiner als 1 mm, insbesondere kleiner als 0,5 mm, ist.

7. Säherz (3) nach Anspruch 1, **dadurch gekennzeichnet,**
**dass** eine durch die Trennwand gebildete Trennwandebene parallel zu einer durch die Säscheibe gebildeten Säscheibenebene angeordnet ist, wobei die Säscheibenebene durch die Stelleinrichtung gegenüber der Trennwandebene parallelverschieblich ausgebildet ist.

8. Einzelkornsämaschine mit mindestens einem Säherz (3) nach einem der vorhergehenden Ansprüche.

## Claims

1. Sowing heart (3) for a single-seed drill with the following features:
- a seed chamber (11) which is separated from a pressure chamber (10) by a rotating seed disk (9),
- the seed disk (9) has seed holes (15) in a defmed arrangement for defmed holding and delivery of seed (16) by means of pressure sections (13, 14) which are defined by the pressure chamber (10),
- the seed chamber (11) is divided into a storage section (17) and a transport and delivery section (18),
- the storage section is separated by a partition (19) at least in part relative to the transport and delivery section (18),
**characterized in that**
the seed disk (9) can be adjusted by an at least partially continuously adjustable actuating means relative to the partition (19) and the actuating means has a clamping element (24) for forcing the seed disk (9) against an actuating element (28) of the actuating means.

2. Sowing heart (3) as claimed in Claim 1, wherein the clamping element (24) is a spring, preferably a flat spring, even more preferably a disk spring.

3. Sowing heart (3) as claimed in Claim 2, wherein the clamping element (24) is arranged to be able to rotate with the seed disk (9).

4. Sowing heart (3) as claimed in Claim 2 or 3, wherein the clamping element (24) is located on a drive shaft (22) for rotation of the seed disk (9).

5. Sowing heart (3) as claimed in one of Claims 2 to 4, wherein the actuating means has a flange (25) between the clamping element (24) and the seed disk (9) for transmitting the force of rotation from a drive shaft (22) of the sowing heart (3) to the seed disk (9).

6. Sowing heart (3) as claimed in one of Claims 2 to 5, wherein the spring path of the spring is less than 1 mm, especially less than 0.5 mm.

7. Sowing heart (3) as claimed in Claim 1, wherein there is a partition plane formed by the partition parallel to one plane of the seed disk formed by the seed disk, the plane of the seed disk being made by the actuating means to be able to move parallel relative to the plane of the partition.

8. Single-seed drill with at least one sowing heart (3) as claimed in one of the preceding claims.

## Revendications

1. Partie centrale pour semis (3) destinée à un semoir monograine présentant les caractéristiques suivantes :
- une chambre à semence (11) séparée d'une chambre de pression (10) par un disque semoir (9) rotatif
- le disque semoir (9) présente des trous pour semer (15) dans un agencement défini pour le logement et la distribution définis de semence (16) au moyen de tronçons de pression (13, 14) définis par la chambre de pression (10),
- la chambre à semence (11) est divisée en une partie d'alimentation (17) et une partie de transport et de distribution (18)
- la partie d'alimentation est séparée par une paroi de séparation (19) au moins partiellement par rapport à la partie de transport et de distribution (18),
**caractérisée en ce que**
le disque semoir (9) peut être réglé par un dispositif de réglage au moins partiellement progressif par rapport à la paroi de séparation (19) et le dispositif de réglage présente un élément de serrage (24) pour la sollicitation du disque semoir (9) par rapport à un actionneur (28) du dispositif de réglage.

2. Partie centrale de semoir (3) selon la revendication 1, **caractérisée en ce que** l'élément de serrage (24) est un ressort, de préférence un ressort plat, avec une préférence encore plus grande un ressort à disque.

3. Partie centrale de semoir (3) selon la revendication 2, **caractérisée en ce que** l'élément de serrage (24) avec le disque semoir (9) est disposé de façon rotative.

4. Partie centrale de semoir (3) selon la revendication 2 ou 3, **caractérisée en ce que** l'élément de serrage (24) est disposé sur un arbre d'entraînement (22) pour la rotation du disque semoir (9).

5. Partie centrale de semoir (3) selon l'une quelconque des revendications 2 à 4, **caractérisée en ce que** le dispositif de réglage présente une bride (25) entre l'élément de serrage (24) et le disque semoir (9) pour la transmission de la force de rotation d'un arbre d'entraînement (22) de la partie centrale de semoir (3) au disque semoir (9).

6. Partie centrale de semoir (3) selon l'une quelconque des revendications 2 à 5, **caractérisée en ce que** la course du ressort est inférieure à 1 mm, en particulier inférieure à 0,5 mm.

7. Partie centrale de semoir (3) selon la revendication 1, **caractérisée en ce qu'**un plan de paroi de séparation formé par la paroi de séparation est disposé parallèlement à un plan de disque semoir formé par le disque semoir, le plan du disque semoir passant par le dispositif de réglage étant conçu de façon à pouvoir coulisser parallèlement par rapport au plan de la paroi de séparation.

8. Semoir monograine comprenant au moins une partie centrale de semoir (3) selon l'une quelconque des revendications précédentes.
